# EUROPÄISCHE PATENTSCHRIFT

(11) **EP 2 899 101 B1**
(45) Veröffentlichungstag und Bekanntmachung des Hinweises auf die Patenterteilung: **07.03.2018**
(21) Anmeldenummer: 14152171.6
(22) Anmeldetag: 22.01.2014
(51) Int. Cl.: B62D 53/08

(54) **Königszapfen mit Sensorvorrichtung**
King pin with sensor device
Pivot central avec capteur

(43) Veröffentlichungstag der Anmeldung: 29.07.2015
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- WO-A1-2010/019027
- WO-A1-2013/180562
- WO-A2-2009/000765
- GB-A- 2 486 474

## Beschreibung

### Technisches Gebiet

Die vorliegende Erfindung betrifft allgemein mit einer zugfahrzeugseitigen Sattelkupplung lösbar in Eingriff bringbare Königszapfen zum Anbau an einen Sattelauflieger. Des Weiteren betrifft die vorliegende Erfindung Sattelkupplungen, mit der ein erfindungsgemäßer Königszapfen lösbar verbindbar ist.

### Technischer Hintergrund

Fahrzeuganhänger können über eine Kupplungseinrichtung mit einem Zugfahrzeug verbunden und von diesem gezogen werden. Beispielsweise weisen Sattelauflieger im vorderen Bereich eine Tragplatte mit einem Königszapfen auf, der mit einer zugfahrzeugseitigen Sattelkupplung lösbar verbindbar ist. Die anhängerseitige Tragplatte liegt nach dem Einrasten des Königszapfens in der Sattelkupplung auf der zugfahrzeugseitigen Sattelkupplungsplatte auf. Dadurch werden vertikale Abstützkräfte des Sattelaufliegers in die zugfahrzeugseitige Sattelkupplungsplatte geleitet.

Zunehmend werden Fahrzeuganhänger mit zusätzlichen Einrichtungen ausgestattet, die neben den Hauptaufgaben des Transports von Gütern weitere Funktionen ausführen können. Beispielsweise können Fahrzeuganhänger lenkbare Achsen, Rekuperationssysteme und Antriebs- sowie Bremsvorrichtungen aufweisen. Mit Hilfe dieser Einrichtungen können der Sattelauflieger gelenkt werden, die kinetische Energie des Fahrzeuganhängers gespeichert und im Bedarfsfall eventuell auch wieder abgegeben werden bzw. der Fahrzeuganhänger zusätzlich angetrieben oder abgebremst werden.

Um die zusätzlichen Einrichtungen effizient zu steuern, ist es vorteilhaft, den Fahrzustand des Fahrzeuganhängers zu ermitteln. Um z. B. ein sich am Fahrzeuganhänger befindliches Rekuperationssystem effizient zu steuern, kann es vorteilhaft sein, den Fahrzustand kontinuierlich zu ermitteln, z. B. ob das Gespann aus Zugfahrzeug und Fahrzeuganhänger aktuell beschleunigt oder abgebremst wird. Im Falle einer Verzögerung des Fahrzeuganhängers kann das Rekuperationssystem derart gesteuert werden, dass Energie gespeichert wird, z. B. hydraulisch, kinetisch oder pneumatisch. Andernfalls, im Falle einer Beschleunigung des Fahrzeuganhängers, kann das Rekuperationssystem derart gesteuert werden, dass die gespeicherte Energie beispielsweise zum Antreiben des Fahrzeuganhängers genutzt wird und somit das Zugfahrzeug beim Beschleunigen bzw. Antreiben des Zuggespanns unterstützt wird.

Außerdem kann es bei Kurvenfahrten vorteilhaft sein, den aktuell durchfahrenen Kurvenradius zu bestimmen und eine dem bestimmten Kurvenradius zugeordnete Maximalgeschwindigkeit zu ermitteln, die mit der aktuellen Fahrgeschwindigkeit verglichen wird. Übersteigt die aktuelle Fahrgeschwindigkeit die dem aktuellen Kurvenradius zugeordnete Maximalgeschwindigkeit, kann aus Sicherheitsgründen die Fahrgeschwindigkeit reduziert werden. Um diese Fahrzustände ermitteln zu können, sind Sensoren vorzusehen.

Die DE 44 02 528 C2 offenbart eine Anordnung von Messmitteln an einem Sattelfahrzeug. Die Messmittel sind zur Messung von auftretenden Kräften zwischen Sattelauflieger und Zugfahrzeug an der Sattelkupplung angeordnet, wodurch die Messergebnisse nur aufwändig an anhängerseitige Systeme übertragbar sind.

Das gleiche Problem kann auch bei der Vorrichtung zum Nachweis und zur Anzeige der Position von Komponenten von Fahrzeugkupplungen gemäß der EP 1 896 317 B1, DE 198 20 139 A1 oder DE 102 41 904 A1 auftreten. Auch hier sind die entsprechenden Vorrichtungen an der Sattelkupplung vorgesehen.

Aus der EP 1 199 547 A2 ist eine Messvorrichtung zum Messen von Kräften zwischen Fahrzeuganhängern und Zugfahrzeugen bekannt. Hier ist die Tragplatte mit dem Königszapfen aufwändig speziell zu lagern. Aus der gattungsgemäßen GB 2 486 474 A ist eine Sensorvorrichtung bekannt, mit der die auf einen Verbindungszapfen, der einen Fahrzeuganhänger mit einem Zugfahrzeug verbindet, ausgeübte Last erfasst werden kann, wenn der Fahrzeuganhänger relativ zum Zugfahrzeug beschleunigt oder verzögert wird.
Die WO 2010/019027 A1, WO 2009/000765 A2 und die WO 2013/180562 A1 zeigen jeweils Messvorrichtungen, mit denen die relative Position eines Fahrzeuganhängers relativ zu einem Zugfahrzeug, beispielsweise der Winkel zwischen Zugfahrzeug und Fahrzeuganhänger, ermittelt werden können.

### Darstellung der Erfindung

Gemäß der vorliegenden Erfindung weist ein Königszapfen zum Anbau an einen Sattelauflieger einen mit einer zugfahrzeugseitigen Sattelkupplung lösbar in Eingriff bringbaren Zapfenkörper und eine am Zapfenkörper angeordnete Sensorvorrichtung zum Erfassen eines Fahrzustandes des Sattelaufliegers auf. Die Sensorvorrichtung weist zumindest eine Sensoreinheit auf. Der Zapfenkörper des Königszapfens weist zumindest eine erste Bohrung, die sich von der Mantelfläche des Zapfenkörpers vorzugsweise im Wesentlichen radial nach innen erstreckt, und eine zweite Bohrung auf, die sich entlang einer Längsachse des Zapfenkörpers erstreckt. Die zumindest eine erste Bohrung öffnet in die zweite Bohrung, so dass die zumindest eine erste Bohrung mit der zweiten Bohrung verbunden ist. Die zumindest eine Sensoreinheit weist ein Kontaktelement auf, das in der ersten Bohrung derart beweglich angeordnet ist, dass es zumindest teilweise radial von der Mantelfläche des Zapfenkörpers hervorsteht. Das Kontaktelement ist ferner dazu ausgebildet, von der zugfahrzeugseitigen Sattelkupplung in radialer Richtung in den Zapfenkörper gedrückt werden zu können. Außerdem weist die zumindest eine Sensoreinheit ferner einen Sensormechanismus auf, der in der zweiten Bohrung angeordnet ist. Überschreitet eine vom Kontaktelement auf den Sensormechanismus aufgebrachte Kraft eine vorbestimmte Kraft, erzeugt der Sensormechanismus ein Signal, das den jeweiligen Fahrzustand des Sattelaufliegers anzeigt.

Mit einem erfindungsgemäßen Königszapfen und der daran vorgesehenen Sensorvorrichtung können während der Fahrt des Zuggespanns ein oder mehrere Fahrzustände des Sattelaufliegers erfasst werden. Auf der Grundlage von Ausgangssignalen der am Zapfenkörper angeordneten Sensorvorrichtung ist es dann möglich über eine geeignete Steuerung wie z.B. ein Steuergerät das Zugfahrzeug und/oder den Sattelauflieger beziehungsweise daran angebrachte Systeme in Abhängigkeit des detektierten Fahrzustandes zu steuern. Beispielsweise kann in Erwiderung auf ein einen Beschleunigungszustand oder einen Verzögerungszustand des Sattelaufliegers anzeigendes Signal ein am Sattelauflieger angeordnetes Rekuperationssystem gesteuert werden.

Wird beispielsweise eine Verzögerung des Zuggespanns erfasst, kann das Rekuperationssystem dahingehend gesteuert werden, dass die kinetische Energie des Sattelaufliegers gespeichert wird, beispielsweise elektrisch, hydraulisch oder pneumatisch. Wird daraufhin eine Beschleunigung des Zuggespanns erfasst, kann das Rekuperationssystem dahingehend gesteuert werden, dass die gespeicherte Energie zum Antreiben des Sattelaufliegers genutzt wird, beispielsweise über einen am Sattelauflieger angeordneten Elektromotor, der eine Radachse des Sattelaufliegers antreibt und somit das Zugfahrzeug beim Beschleunigen des Zuggespanns unterstützt.

Außerdem können die die erfassten Fahrzustände des Sattelaufliegers anzeigenden Signale an eine Steuerung des Zugfahrzeugs übertragen werden, beispielsweise über eine drahtgebundene und/oder eine drahtlose Kommunikationsverbindung, z. B. WLAN, Bluetooth oder Infrarot, zwischen der sattelaufliegerseitigen Sensorvorrichtung und der zugfahrzeugseitigen Steuerung. Die Steuerung des Zuggespanns kann in anderen Ausführungsformen auch am Sattelauflieger vorgesehen sein. Die Steuerung des Zugfahrzeugs oder des Zuggespanns kann dann in Verbindung mit Fahrparametern des Sattelaufliegers oder Zugfahrzeugs, wie beispielsweise der aktuellen Geschwindigkeit des Zuggespanns, dem aktuellen Lenkeinschlag des Zugfahrzeugs, einem Lenkeinschlag einer lenkbaren Achse des Sattelaufliegers oder dem Grad der Betätigung des Brems- bzw. Gaspedals des Zugfahrzeugs, das Zugfahrzeug oder das Zuggespann steuern.

So kann es beispielsweise vorteilhaft sein, bei Erfassung des momentanen Winkels zwischen der Längsachse des Zugfahrzeugs und der Längsachse des Sattelaufliegers mittels der am Königszapfen vorgesehenen Sensorvorrichtung auf den Kurvenradius und der Kurvenrichtung (Rechts- oder Linkskurve) der aktuell durchfahrenen Kurve zu schließen. Dem ermittelten aktuellen Kurvenradius kann daraufhin eine vorbestimmte Maximalgeschwindigkeit zugeordnet werden, mit der eine sichere Kurvenfahrt möglich ist. Überschreitet jedoch die aktuell gemessene Fahrgeschwindigkeit die dem ermittelten Kurvenradius zugeordnete Maximalgeschwindigkeit, kann dem Fahrer des Zugfahrzeugs eine Warnung ausgegeben werden, die den Fahrer dazu veranlassen kann, die Geschwindigkeit des Zuggespanns zu reduzieren. Die aktuelle Fahrgeschwindigkeit kann beispielsweise von der Steuerung des Zugfahrzeugs bereitgestellt werden oder kann z. B. von einem am Sattelauflieger angeordneten elektronischen Bremssystemmodulor bereitgestellt werden.

In einer beispielhaften Ausführungsform der vorliegenden Erfindung weist der Zapfenkörper eine Mantelfläche auf, die wenigstens an bestimmten Bereichen mit der Sattelkupplung kontaktiert. Die Sensorvorrichtung selbst steht über die Mantelfläche vor, um bei bestimmten Fahrzuständen mit Teilen der Sattelkupplung zu kontaktieren. Damit kann unter Umständen eine einfache und kostengünstige als auch robuste Erfassung eines Fahrzustandes realisiert werden.

In einer anderen beispielhaften Ausführungsform der Erfindung weist die Sensorvorrichtung zumindest eine erste Sensoreinheit auf, die in Vorwärtsrichtung des Sattelaufliegers gesehen am hinteren Bereich des Zapfenkörpers des Königszapfens angeordnet und zum Erfassen eines Beschleunigungsvorgangs des Sattelaufliegers ausgebildet ist. Die zumindest eine erste Sensoreinrichtung ist dazu ausgebildet, z. B. von einer Verriegelungsvorrichtung der zugfahrzeugseitigen Sattelkupplung bei Berührung der Verriegelungsvorrichtung mit dem in Vorwärtsrichtung des Sattelaufliegers hinteren Bereich des Zapfenkörpers des Königszapfens betätigt zu werden und daraufhin ein Signal zu erzeugen, das einen Beschleunigungszustand des Sattelaufliegers anzeigt.

Beispielsweise gelangt bei einer Beschleunigung des Zugfahrzeugs der in Vorwärtsrichtung des Sattelaufliegers hintere Bereich des Königszapfens in Kontakt mit der Verriegelungsvorrichtung der Sattelkupplung. Während dem Kontakt zwischen dem hinteren Bereich des Zapfenkörpers des Königszapfens und der Verriegelungsvorrichtung der Sattelkupplung kann die zumindest eine erste Sensoreinheit betätigt und ein die Beschleunigung anzeigendes Signal erzeugt werden.

In einer weiteren beispielhaften Ausführungsform weist die Sensorvorrichtung zumindest eine zweite Sensoreinheit auf, die in Vorwärtsrichtung des Sattelaufliegers am vorderen Bereich des Zapfenkörpers des Königszapfens angeordnet und zum Erfassen eines Verzögerungszustands ausgebildet ist. Die zumindest eine zweite Sensoreinheit ist dazu ausgebildet, von der Sattelkupplungsplatte des Zugfahrzeugs bei Berührung der Sattelkupplungsplatte mit dem in Vorwärtsrichtung des Sattelaufliegers vorderen Bereich des Zapfenkörpers des Königszapfens betätigt zu werden und daraufhin ein Signal zu erzeugen, das den Verzögerungszustand des Sattelaufliegers anzeigt.

Beispielsweise kommt bei einer Verzögerung des Zugfahrzeugs der in Vorwärtsrichtung des Sattelaufliegers vordere Bereich des Königszapfens in Kontakt mit der Sattelkupplungsplatte und der Sattelauflieger kann vom Zugfahrzeug verzögert werden. Während dem Kontakt zwischen dem Königszapfen und der Sattelkupplungsplatte wird die zumindest eine zweite Sensoreinheit betätigt und das den Verzögerungszustand anzeigende Signal kann erzeugt werden.

Der Verzögerungszustand tritt z. B. während einer Normalfahrt auf einer ebenen Strecke auf, bei der das Zuggespann beispielsweise ausrollt und weder das Gas- noch das Bremspedal des Zugfahrzeugs betätigt ist. Im Gegensatz dazu kann ein Bremszustand definiert werden, der sich vom Verzögerungszustand dadurch abgrenzt, dass während dem Bremszustand ein eine Betätigung des Gaspedals des Zugfahrzeugs anzeigendes Signal erfasst wird und der Sattelauf lieger über ein eigenes Bremssystem, beispielsweise einem elektronischen Bremssystem, abgebremst wird. Dabei kann es vorteilhaft sein, den Sattelauflieger stärker zu bremsen als das Zugfahrzeugs, so dass das Zuggespann während eines Bremszustands gestreckt wird. Diese Steuerung der unterschiedlichen Abbremsung des Zugfahrzeugs und des Sattelaufliegers kann auch als Voreilung bezeichnet werden. In diesem Fall kann die zumindest eine erste Sensoreinheit in Kontakt mit der Sattelkupplung kommen.

Um bei Betätigung der ersten Sensoreinheit einen Beschleunigungszustand von einem Bremszustand zu unterscheiden, kann z. B. zusätzlich noch die Bremspedalbetätigung geprüft werden. Ist im Falle der Betätigung der ersten Sensoreinheit auch das Bremspedal betätigt, kann dies den Bremszustand anzeigen. Ist aber bei Betätigung der ersten Sensoreinheit das Bremspedal nicht betätigt, kann dies den Beschleunigungszustand anzeigen.

In einer weiteren beispielhaften Ausführungsform der vorliegenden Erfindung weist die Sensorvorrichtung ferner wenigstens eine dritte Sensoreinheit auf, die in Vorwärtsrichtung des Sattelaufliegers am linken Bereich des Zapfenkörpers des Königszapfens angeordnet und zum Erfassen einer Rechtsbewegung des Sattelaufliegers ausgebildet ist. Zusätzlich oder alternativ weist die Sensorvorrichtung zumindest eine vierte Sensoreinheit auf, die in Vorwärtsrichtung des Sattelaufliegers am rechten Bereich des Königszapfens angeordnet und zum Erfassen einer Linksbewegung des Sattelaufliegers ausgebildet ist. Dabei kann die zumindest eine dritte bzw. vierte Sensoreinheit von der Sattelkupplung betätigt werden, wobei die zumindest eine dritte oder vierte Sensoreinheit ein Signal erzeugen kann, das eine Bewegung nach rechts oder links des Sattelaufliegers anzeigt, also ob der Sattelauflieger eine Rechts- bzw. Linkskurve durchfährt.

In weiteren beispielhaften Ausführungsformen der vorliegenden Erfindung kann wenigstens eine Sensoreinheit dazu ausgebildet sein, den Grad der Betätigung durch die Sattelkupplung anzuzeigen, so dass z. B. auf den Beschleunigungs- oder Verzögerungsgrad oder z. B. den Kurvenradius der vom Sattelauflieger durchfahrenen Kurve geschlossen werden kann.

In einer weiteren beispielhaften Ausführungsform der vorliegenden Erfindung weist die zumindest eine Sensoreinheit ferner eine Federeinrichtung auf, die in der ersten Bohrung und/oder zweiten Bohrung angeordnet ist und das Kontaktelement in radialer Richtung nach außen drückt. Auf der anderen Seite steht die Federeinrichtung mit dem Sensormechanismus in Verbindung und kann die von dem Kontaktelement aufgebrachte Kraft auf den Sensormechanismus übertragen. In dieser Ausgestaltung kann das Kontaktelement von der zugfahrzeugseitigen Sattelkupplung betätigt werden, wobei durch die Federeinrichtung gewährleistet werden kann, dass bei Änderung des Fahrzustands, wenn sich z. B. der Kontakt zwischen der Sattelkupplung und dem Kontaktelement wieder löst, das Kontaktelement kontinuierlich von der Mantelfläche des Zapfenkörpers hervorsteht.

In einer beispielhaften Ausführungsform der vorliegenden Erfindung weist der Sensormechanismus einen Hebel mit einem ersten Ende und einem dem ersten Ende gegenüberliegenden zweiten Ende auf. Der Hebel ist in der zweiten Bohrung angeordnet, erstreckt sich entlang der Längsachse des Zapfenkörpers und ist an seinem ersten Ende im Zapfenkörper schwenkbar gelagert. Der Hebel steht mit dem Kontaktelement derart in Wirkverbindung, dass der Hebel bei einer vom Kontaktelement auf den Hebel aufgebrachten Kraft geschwenkt wird.

In einer weiteren beispielhaften Ausführungsform der vorliegenden Erfindung weist der Sensormechanismus ferner zumindest eine Tastvorrichtung auf, die dazu ausgebildet ist, bei einer Schwenkbewegung des Hebels vom zweiten Ende des Hebels betätigt zu werden und das Signal zu erzeugen, das den jeweiligen Fahrzustand des Sattelaufliegers anzeigt. Beispielsweise erstreckt sich der Hebel zumindest teilweise außerhalb des Zapfenkörpers, so dass sich das zweite Ende des Hebels außerhalb des Zapfenkörpers befindet. In dieser Ausführungsform kann die Tastvorrichtung außerhalb des Zapfenkörpers angeordnet sein und vom zweiten Ende des Hebels betätigt werden. Die zumindest eine Tastvorrichtung kann beispielsweise auf einer relativ zu einer den Königszapfen tragenden Tragplatte abgewandten Seite angeordnet sein. In dieser Ausgestaltung erstreckt sich der Hebel auch durch eine Öffnung in der Tragplatte.

In einer weiteren beispielhaften Ausführungsform der vorliegenden Erfindung weist der Zapfenkörper des Königszapfens einen ersten Bereich mit einem ersten Durchmesser und einen zweiten Bereich mit einem zweiten Durchmesser auf, wobei der erste Durchmesser größer als der zweite Durchmesser ist. Beispielsweise kann zumindest eine Sensoreinheit im ersten Bereich angeordnet sein und/oder zumindest eine Sensoreinheit kann im zweiten Bereich angeordnet sein. Vorzugsweise kann die Mantelfläche des ersten Bereichs mit der Sattelkupplungsplatte der Sattelkupplung in Berührung kommen, wobei die Mantelfläche des zweiten Bereichs vorzugsweise mit der Verschlussvorrichtung der Sattelkupplung in Berührung kommen kann.

In einer weiteren beispielhaften Ausführungsform der vorliegenden Erfindung weist die Sensorvorrichtung eine Winkelsensoreinheit auf, die dazu ausgebildet ist, ein den Winkel zwischen der Längsachse des Sattelaufliegers und der Längsachse des Zugfahrzeugs anzeigendes Signal zu erzeugen. Die Winkelsensoreinheit kann beispielsweise einen am Zapfenkörper des Königszapfens angeordneten Markierungsring mit mehreren Markierungen und einen die Markierungen des Markierungsrings erfassenden Sensor aufweisen, dazu ausgebildet sein kann, beispielsweise an der zugfahrzeugseitigen Sattelkupplung angeordnet zu sein. Beispielsweise ist der Sensor ein aktiver Sensor oder passiver Sensor, wie z. B. ein induktiver Sensor, ein kapazitiver Sensor, ein digitaler Sensor oder ein Magnetfeldsensor.

Der Markierungsring kann beispielsweise ein Zahnring sein, der am Umfang des Zapfenkörpers des Königszapfens angeordnet ist. Beispielsweise kann der Zahnring auch einteilig mit dem Zapfenkörper des Königszapfens ausgebildet sein. In einer beispielhaften Ausführungsform kann der Sensor ein induktiver Sensor mit einem Polstift, der mit einem Dauermagneten verbunden und von einer Wicklung umgeben ist, sein. Die Drehbewegung des Zapfenkörpers des Königszapfens und des daran angeordneten Zahnrings relativ zu dem an der Sattelkupplung angeordneten induktiven Sensor, beispielsweise bei einer Kurvenfahrt des Zuggespanns, führt zu einem damit verbundenen Wechsel von Zahn und Zahnlücke. Die Zahnlücke kann jedoch in anderen Ausführungsformen auch mit einem nichtleitenden Material, wie beispielsweise Kunststoff, ausgefüllt sein. Dadurch wird eine Änderung des magnetischen Flusses durch den Polstift und die Wicklung bewirkt. Dieses sich ändernde Magnetfeld induziert in der Wicklung eine messbare Wechselspannung, die auf den Drehwinkel des Zapfenkörpers des Königszapfens relativ zum Sensor und der Sattelkupplung schließen lässt, woraus das den Winkel zwischen der Längsachse des Zugfahrzeugs und der Längsachse des Sattelaufliegers anzeigende Signal erzeugt werden kann.

Der Sensor der Winkelsensoreinheit kann in weiteren beispielhaften Ausführungsformen ein aktiver Sensor sein, z. B. ein Hall-Sensor, ein Hall-Sensor mit magnetischem Encoder-Ring oder ein magnetoresistiver AMR-Sensor. Außerdem können die mehreren Markierungen ferner Ausnehmungen oder sonstige Markierungen sein, die von dem Sensor erfasst werden können, um das den Winkel zwischen der Längsachse des Sattelaufliegers und der Längsachse des Zugfahrzeugs anzeigende Signal zu erzeugen.

In einer weiteren beispielhaften Ausführungsform der vorliegenden Erfindung weist die Winkelsensoreinheit ein am Zapfenkörper des Königszapfens angeordneten Zahnring, ein mit dem Zahnring kämmendes Zahnrad und einen Drehratensensor auf, der am Zahnrad angeordnet und zum Anzeigen des Winkels zwischen der Längsachse des Zugfahrzeugs und der Längsachse des Sattelaufliegers ausgebildet ist. Der Drehratensensor ermittelt zunächst den sich durch die Lenkbewegung des Zuggespanns einstellenden Rotationsgrad des Zahnrads, das von dem sich relativ zur Sattelkupplung drehenden Zahnring am Königszapfen gedreht wird, und ermittelt daraus den sich zwischen der Längsachse des Zugfahrzeugs und der Längsachse des Sattelaufliegers eingestellten Winkel.

In einer weiteren beispielhaften Ausführungsform der vorliegenden Erfindung weist der Königszapfen ferner eine Steuereinheit auf, die mit der Sensorvorrichtung in Verbindung steht und dazu ausgebildet ist, die von der Sensorvorrichtung erzeugten Signale, die die Fahrzustände des Sattelaufliegers anzeigen, zu verarbeiten und daraufhin Signale zu erzeugen, die den Sattelauflieger und/oder ein den Sattelauflieger antreibendes Zugfahrzeug steuern. Die Steuereinheit kann außerdem die von der Sensorvorrichtung erfassten Signale speichern und beim Erzeugen zukünftiger Signale berücksichtigen.

In weiteren beispielhaften Ausführungsformen der vorliegenden Erfindung können in der Steuereinheit vorbestimmte Tabellen, Diagramme und/oder Formeln gespeichert sein, die dem aktuell erfassten Fahrzustand des Sattelaufliegers vorbestimmte Werte zuordnet bzw. mit diesen verknüpft. So kann es beispielweise vorteilhaft sein, dem erfassten Winkel zwischen dem Sattelauflieger und dem Zugfahrzeug einen aktuellen Kurvenradius und ferner eine dem Kurvenradius zugeordnete Maximalgeschwindigkeit zuzuordnen, mit der die Kurve sicher durchfahren werden kann. Die Steuereinheit kann ferner dazu ausgebildet sein, die Maximalgeschwindigkeit mit der aktuellen Fahrgeschwindigkeit zu vergleichen und bei Überschreitung der Maximalgeschwindigkeit dem Fahrer des Zugfahrzeugs ein Warnsignal ausgeben.

In anderen Ausführungsformen kann der hierin offenbarte Königszapfen eines Sattelaufliegers mit einer Sattelkupplung einer Dolly-Achse gekoppelt werden, die wiederum mit einem Zugfahrzeug verbunden ist. In einer solchen Ausgestaltung kann z. B. die Winkelsensoreinheit den Winkel zwischen der Längsachse der Dolly-Achse und der Längsachse des Sattelaufliegers bestimmen.

### Kurze Beschreibung der Zeichnungen

Weitere Merkmale und Aspekte dieser Erfindung werden durch die folgende Beschreibung und die beiliegenden Zeichnungen offensichtlich, in denen:
Fig. 1 eine schematische Seitenansicht eines Sattelaufliegers zeigt,
Fig. 2 eine perspektivische Ansicht einer beispielhaften Sattelkupplung zeigt, die mit Sattelauflieger der Fig. 1 gekoppelt werden kann,
Fig. 3 eine Schnittansicht durch den Königszapfen des Sattelaufliegers der Fig. 1 zeigt,
Fig. 4 eine Schnittansicht durch eine beispielhafte Sattelkupplung mit einem gekoppelten erfindungsgemäßen Königszapfen zeigt,
Fig. 5 eine Schnittansicht durch eine weitere beispielhafte Sattelkupplung mit einem gekoppelten weiteren erfindungsgemäßen Königszapfen zeigt und
Fig. 6 eine Seitenansicht eines Kippsattelaufliegers mit einem erfindungsgemäßen Königszapfen zeigt.

### Ausführliche Beschreibung von Ausführungsbeispielen

In der Beschreibung der vorliegenden Erfindung beziehen sich Richtungsangaben auf einen Fahrzeuganhänger bei Vorwärtsfahrt. In seitlicher Richtung bedeutet somit diejenige Richtung, die zur Vorwärtsrichtung des Sattelaufliegers quer verläuft und der Links-Rechts-Richtung entspricht.

Ferner sind in der Beschreibung der vorliegenden Erfindung unter Fahrzuständen des Sattelaufliegers beispielsweise die Fahrzustände "Beschleunigung", "Verzögerung", "Rechtsbewegung", "Linksbewegung", "Winkel zwischen der Längsachse des Sattelaufliegers und der Längsachse des den Sattelaufliegers antreibenden Zugfahrzeugs" und "Schüttzustand eines Kippsattelaufliegers" zu subsummieren. Der Fahrzustand "Beschleunigung" zeigt an, dass ein Zugfahrzeug ein Zuggespann, das aus dem Zugfahrzeug und dem Sattelauflieger besteht, beschleunigt. Der Fahrzustand "Verzögerung" zeigt an, dass das Zugfahrzeug das Zuggespann abbremst bzw. verzögert. Die Fahrzustände "Rechtsbewegung" und "Linksbewegung" zeigen jeweils an, dass das Zuggespann eine Rechtskurve bzw. eine Linkskurve durchfährt. Dabei stellt zwischen der Längsachse des Zugfahrzeugs und der Längsachse des Sattelaufliegers ein Winkel ein, der zusätzlich oder alternativ ermittelt werden kann. Der Fahrzustand "Schüttzustand eines Kippsattelaufliegers" zeigt an, ob während einem Schüttvorgang, bei dem die Kippmulde eines Kippsattelaufliegers ausgefahren wird, das in der Kippmulde befindliche Schüttgut tatsächlich aus der Kippmulde rutscht.

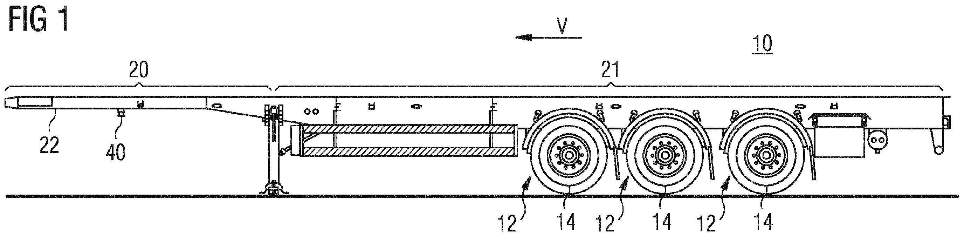

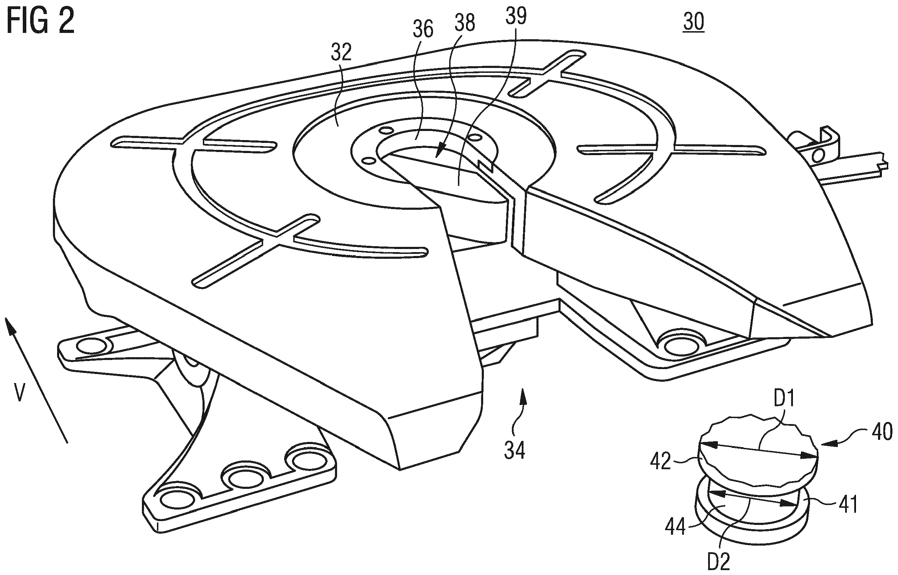

Die Fig. 1 zeigt einen Sattelauflieger 10, der einen vorderen Bereich 20 und einen hinteren Bereich 21 aufweist. Der vordere Bereich 20 hat eine Tragplatte 22, die beim Koppeln des Sattelaufliegers 10 mit einem Zugfahrzeug (nicht gezeigt) auf einer zugfahrzeugseitigen Sattelkupplungsplatte 32 (siehe Fig. 2) zum Übertragen der vertikalen Abstützungskräfte aufliegen kann. Die Tragplatte 22 trägt einen Königszapfen 40, der mit der zugfahrzeugseitigen Sattelkupplung 30 (siehe Fig. 2) gekoppelt werden kann.

Der Sattelauflieger 10 weist im hinteren Bereich 21 beispielsweise drei Radachsen 12 mit jeweils einem Radpaar 14 auf. Die drei Radachsen 12 können nicht lenkbare Starrachsen sein. Alternativ kann zumindest eine der drei Radachsen 12 eine lenkbare Radachse sein, die von einer Lenkeinheit (nicht gezeigt) gelenkt werden kann. Das Lenken der lenkbaren Radachse 12 kann das Zugfahrzeug insbesondere beim Durchfahren von Kurven unterstützen, so dass mit dem Zuggespann Kurven mit geringeren Kurvenradien durchfahren werden können, was insbesondere innerorts vorteilhaft sein kann. Die Anzahl der in der Fig. 1 gezeigten Radachsen 12 ist nicht auf drei beschränkt, d. h. dass der Sattelauflieger 10 beispielsweise auch mit mehr oder weniger als drei Radachsen 12 versehen sein kann.

In beispielhaften Ausführungsformen kann der Sattelauflieger 10 mit einem Rekuperationssystem (in den Zeichnungen nicht explizit dargestellt) ausgestattet sein, das beispielsweise die kinetische Energie des Sattelaufliegers 10 speichern und bei Bedarf die gespeicherte Energie zum Antreiben des Sattelaufliegers 10 abgeben kann. So kann z. B. die kinetische Energie des Sattelaufliegers 10 bei einem Bremsvorgang oder einer Bergabfahrt elektrisch, hydraulisch oder pneumatisch gespeichert werden. Diese gespeicherte Energie kann daraufhin beispielsweise bei einem Beschleunigungsvorgang oder einer Bergauffahrt des Sattelaufliegers 10 zum Antreiben des Sattelaufliegers 10 genutzt werden, beispielsweise über eine an einer der Radachsen 12 angeordneten Antriebseinheit (nicht gezeigt). Dadurch kann das Zugfahrzeug beim Antreiben des Zuggespanns unterstützt werden, was zu einem reduzierten Kraftstoffverbrauch und einem geringeren Bedarf an Motorleistung des Zugfahrzeugs führen kann.

Unter Verweis auf die Fig. 2 ist eine beispielhafte Sattelkupplung 30 gezeigt, die an einem Zugfahrzeug in bekannter Weise angeordnet ist. Außerdem ist in der Fig. 2 beispielhaft ein Ausschnitt eines Königszapfens 40 dargestellt, der mit der Sattelkupplung 30 gekoppelt werden kann. Die Sattelkupplung 30 weist eine Sattelkupplungsplatte 32 auf, auf der die sattelaufliegerseitige Tragplatte 22 bei Kopplung des Zugfahrzeugs mit dem Sattelauflieger 10 aufliegen kann. Die Sattelkupplungsplatte 32 weist eine Führungsöffnung 34 auf, die den Königszapfen 40 bis in eine Verschlussposition führen kann, während das Zugfahrzeug die Sattelkupplung 30 unter die Tragplatte 22 bewegt.

Die Führungsöffnung 34 wird von der Sattelkupplungsplatte 32 begrenzt und die Breite der Führungsöffnung 34 verjüngt sich in Vorwärtsrichtung V des Sattelaufliegers 10 vom hinteren Ende in Richtung des vorderen Endes. Das an dem relativ zum Sattelauflieger 10 in Vorwärtsrichtung V befindliche Ende 36 der Führungsöffnung 34 wird ebenfalls von der Sattelkupplungsplatte 32 begrenzt. Am Ende 36 kann die Mantelfläche des Königszapfens 40 anliegen, so dass die Bewegung des Königszapfens 40 in der Sattelkupplung 30 relativ zum Zugfahrzeug in Vorwärtsrichtung begrenzt ist.

Nachdem der Königszapfen 40 in der Sattelkupplung 30, genauer gesagt am Ende 36 der Führungsöffnung 34, positioniert ist, verriegelt eine Verriegelungsvorrichtung 38 den Königszapfen 40 in der Führungsöffnung 34. Die Verriegelungsvorrichtung 38 weist beispielsweise einen Riegel 39 auf, der sich in der Verriegelungsposition des Königszapfens 40 in Vorwärtsrichtung V hinter dem Königszapfen 40 quer zur Führungsöffnung 34 befindet und eine Rückbewegung des Königszapfens 40 aus der Führungsöffnung 34 verhindert. Somit ist der Königszapfen 40 in der Sattelkupplung 30 verriegelt und der Sattelauflieger 10 mit dem Zugfahrzeug gekoppelt.

An dieser Stelle sei angemerkt, dass der Königszapfen 40 in der Sattelkupplung 30 einen geringen Bewegungsgrad in Richtung der Längsachse des Zugfahrzeugs aufweist, beispielsweise von wenigen Millimetern. Das heißt, dass der Königszapfen 40 nicht gleichzeitig am vorderen Ende 36 an der Sattelkupplungsplatte 32 und am Riegel 39 anliegen kann.

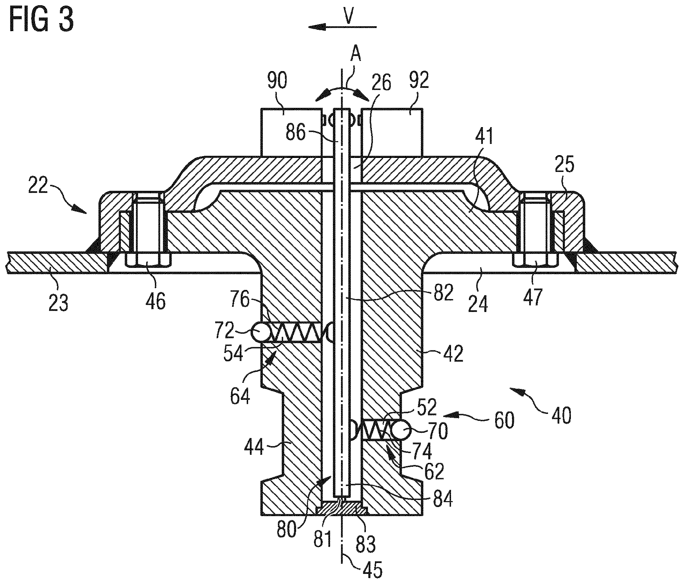

In der Fig. 2 ist ferner ein Ausschnitt eines Königszapfens 40 dargestellt. Der Einfachheit halber ist der in der Fig. 2 dargestellte Königszapfen 40 ohne einer Sensorvorrichtung 60 gezeigt, die in den Fig. 3 bis 5 dargestellt ist. Der Königszapfen 40 hat einen Zapfenkörper 41 mit einem ersten Bereich 42 mit einem ersten Durchmesser D1 und einen zweiten Bereich 44 mit einem zweiten Durchmesser D2. In der in der Fig. 2 gezeigten Ausführungsform ist der erste Durchmesser D1 größer als der zweite Durchmesser D2. Der Zapfenkörper 41 ist beispielsweise im Wesentlichen zylinderförmig.

Die das Ende 36 der Führungsöffnung 34 formende Sattelkupplungsplatte 32 bildet bei Kopplung des Sattelaufliegers 10 mit dem Zugfahrzeug in Vorwärtsrichtung V einen Anschlag für den ersten Bereich 42 und die Verriegelungsvorrichtung 38, insbesondere der Riegel 39, bildet in Rückwärtsrichtung einen Anschlag für den zweiten Bereich 44. In seitlicher Richtung begrenzt ebenfalls die Sattelkupplungsplatte 32 die Bewegung des Königszapfens 40. Somit ist die Bewegung des Sattelaufliegers 10 relativ zum Zugfahrzeug in Vorwärts-, Rückwärts- und in beide Seitenrichtungen begrenzt und der Sattelauflieger 10 mit dem Zugfahrzeug gekoppelt. Dennoch sei nochmals angemerkt, dass der Königszapfen 40 in der Verriegelungsposition innerhalb der Sattelkupplung 30 einen geringen Bewegungsfreiheitsgrad in alle Richtungen aufweist, beispielsweise von wenigen Millimetern.

In der Fig. 2 ist zu erkennen, dass die Verriegelungsvorrichtung 38 unterhalb der Sattelkupplungsplatte 32 angeordnet ist. Aus diesem Grund weist der Zapfenkörper 41 des Königszapfens 40 den ersten und zweiten Bereich 42, 44 auf, dessen Mantelflächen derart angeordnet sind, dass sie mit der Sattelkupplungsplatte 32 bzw. der Verriegelungsvorrichtung 38 in Berührung kommen können.

Die Fig. 3 zeigt eine Schnittansicht durch den Königszapfen 40 der Fig. 1 entlang der Vorwärtsrichtung V. In der Fig. 3 ist die Tragplatte 22 gezeigt, an der sich der Königszapfen 40 angeordnet befindet. Die Tragplatte 22 weist einen horizontalen Bereich 23 auf, der eine Öffnung 24 hat, die von einem Übergangsbereich 25 überdeckt wird. Der Übergangsbereich 25 ist beispielsweise am horizontalen Bereich 23 von oben aufgesetzt und angeschweißt und bildet eine Vertiefung, in die der Königszapfen 40 eingesetzt werden kann. Beispielsweise ist der Königszapfen 40 an dem Übergangsbereich 25 über Schrauben 46, 47 befestigt. In alternativen Ausführungsformen kann jedoch der Königszapfen 40 an der Tragplatte 22 bzw. dem Übergangsbereich 25 auch mittels Nieten, Verschweißungen oder in sonstiger geeigneter Weise befestigt werden.

Der Zapfenkörper 41 erstreckt sich entlang einer im Wesentlichen senkrecht zu der von der Tragplatte 22 aufgespannten Ebene verlaufenden Längsachse 45. Der Zapfenkörper 41 weist mehrere erste Bohrungen 52, 54 auf, die sich im Wesentlichen horizontal und radial im Zapfenkörper 41 erstrecken. Außerdem erstreckt sich entlang der Längsachse 45 eine zweite Bohrung 50 durch den gesamten Zapfenkörper 41. Alternativ kann die zweite Bohrung 50 ein Sackloch sein, das den Zapfenkörper 41 an der unteren Seite nicht durchdringt.

Am Zapfenkörper 41 ist eine Sensorvorrichtung 60 angeordnet, die eine erste Sensoreinheit 62 und eine zweite Sensoreinheit 64 aufweist. Die erste Sensoreinheit 62 ist in Vorwärtsrichtung V des Sattelaufliegers 10 am hinteren Bereich des zweiten Bereichs 44 des Zapfenkörpers 41 angeordnet und die zweite Sensoreinheit 64 ist in Vorwärtsrichtung V des Sattelaufliegers 10 am vorderen Ende des ersten Bereichs 42 des Zapfenkörpers 41 angeordnet.

Die erste Sensoreinheit 62 weist ein Kontaktelement 70 auf, das in der sich im Zapfenkörper 41 befindlichen Bohrung 52 beweglich angeordnet ist. Die Bohrung 52 erstreckt sich im zweiten Bereich 44 im Wesentlichen senkrecht zur Längsachse 45 bis in die zweite Bohrung 50. Das Kontaktelement 70, das beispielsweise eine Kugel ist, hat einen Durchmesser der im Wesentlichen gleich dem Durchmesser der Bohrung 52 ist.

Damit das Kontaktelement 70 in radialer Richtung nicht nach außen herausfallen kann, kann nach dem Positionieren des Kontaktelements 70 in der Bohrung 52 das radial äußere Ende der Bohrung 52 plastisch verformt werden, beispielsweise durch einen Hammer- bzw. Körnerschlag von außen auf die Mantelfläche des zweiten Bereichs 44 auf die äußere Öffnung der Bohrung 52, so dass sich der Durchmesser der Bohrung 52 lokal am radial äußeren Bereich der Bohrung 52 zumindest teilweise verkleinert. Somit wird ein Herausfallen des Kontaktelements 70 aus der Bohrung 52 verhindert, wobei trotzdem gewährleistet ist, dass das Kontaktelement 70 zumindest teilweise von der Mantelfläche des zweiten Bereichs 44 radial hervorstehen und in der Bohrung 52 radial nach innen beweglich sein kann.

Die erste Sensoreinheit 62 weist ferner eine Federeinrichtung 74, beispielsweise eine Spiralfeder, auf, die in der Bohrung 52 relativ zum Kontaktelement 70 innen angeordnet ist und das Kontaktelement 70 derart radial nach außen drückt, dass das Kontaktelement 70 zumindest teilweise von der Mantelfläche des zweiten Bereichs 44 hervorsteht. Die Federeinrichtung 74 kann in weiteren Ausführungsformen beispielsweise eine Tellerfeder, eine pneumatische Federeinrichtung oder eine sonstige Federeinrichtung sein, die das Kontaktelement 70 radial nach außen drückt, so dass das Kontaktelement 70 von der Mantelfläche des zweite Bereichs 44 zumindest teilweise hervorsteht.

Die Federeinrichtung 74 erstreckt sich in der in der Fig. 3 gezeigten Ausführungsform in die zweite Bohrung 50 und ist mit einem Sensormechanismus 80 verbunden, der in der zweiten Bohrung 50 angeordnet ist. Überschreitet die vom Kontaktelement 70 auf den Sensormechanismus 80 aufgebrachte Kraft eine vorbestimmte Kraft, wird ein Signal erzeugt, das einen Fahrzustand des Sattelaufliegers 10 anzeigt, z. B. eine Beschleunigung, eine Verzögerung oder eine Voreilung.

Der Sensormechanismus 80 weist einen Hebel 82 auf, der in der zweiten Bohrung 50 angeordnet ist und sich entlang der Längsachse 45 des Zapfenkörpers 41 erstreckt. Der Hebel 82 hat ein erstes Ende 84 und ein zweites Ende 86. Das erste Ende 84 ist über ein Gelenk 81 schwenkbar an einem Verschluss 83 angebracht, der die zweite Bohrung 50 des Zapfenkörpers 41 am unteren Ende verschließt und am Zapfenkörper 41 befestigt ist. Somit ist der Hebel 82 im Zapfenkörper 41 über das Gelenk 81 schwenkbar gelagert.

In ähnlicher Weise ist die zweite Sensoreinheit 64 aufgebaut, die ebenfalls ein Kontaktelement 72 und eine Federeinrichtung 76 aufweist, die das Kontaktelement 72 radial nach außen drückt. Das Kontaktelement 72 und die Federeinrichtung 76 sind in der Bohrung 54 angeordnet. Die Federeinrichtung 76 ist ebenfalls mit dem Hebel 82 verbunden und kann die vom Kontaktelement 72 aufgebrachte Kraft an den Hebel 82 übertragen.

Auf der anderen Seite erstreckt sich das zweite Ende 86 des Hebels 82 bis außerhalb des Zapfenkörpers 41 und durch eine Öffnung 26 im Übergangsbereich 25 der Tragplatte 22. Die Kontaktelemente 70, 72, die jeweils von der Mantelfläche des ersten und zweiten Bereichs 42, 44 hervorstehen, können mit der Sattelkupplungsplatte 32 bzw. dem Riegel 39 der Verriegelungsvorrichtung 38 (siehe Fig. 2) in Berührung gelangen und von diesen in radialer Richtung nach innen gedrückt werden. Die von den Kontaktelementen 70, 72 jeweils über die Federeinrichtungen 74, 76 auf den Hebel 82 aufgebrachte Kraft führt zu einer Schwenkbewegung des Hebels 82 um das Gelenk 81, da die Verbindungspunkte der Federeinrichtungen 74, 76 mit dem Hebel 82 vom Gelenk 81 beabstandet sind. Dabei wird das zweite Ende 86 des Hebels 82 geschwenkt (durch den Doppelpfeil A angedeutet), so dass eine erste Tastvorrichtung 90 oder eine zweite Tastvorrichtung 92 betätigt wird.

In einer weiteren Ausführungsform kann zwischen dem zweiten Ende 86 des Hebels 82 und den Tastvorrichtungen 90, 92 eine Vorrichtung angeordnet sein, die zum Verstärken der Schwenkbewegung des Hebels 82 ausgebildet ist. Diese Vorrichtung kann die zumeist nur geringe Schwenkbewegung des Hebels 82 erfassen und derart verstärken, dass die jeweilige Tastvorrichtung 90, 92 betätigt wird.

Die erste Tastvorrichtung 90 erzeugt in Erwiderung der Betätigung durch das zweite Ende 86 des Hebels 82 ein Signal, das den Fahrzustand einer Beschleunigung des Sattelaufliegers 10 anzeigt. Die zweite Tastvorrichtung 92 hingegen erzeugt in Erwiderung der Betätigung durch das zweite Ende 86 des Hebels 82 ein Signal, das den Fahrzustand einer Verzögerung des Sattelaufliegers 10 anzeigt. Die erste und zweite Tastvorrichtung 90, 92 können ferner einen Betätigungsgrad anzeigen, was z. B. auf den Grad der Beschleunigung bzw. der Verzögerung schließen lassen kann.

Alternativ oder zusätzlich zu den ersten und zweiten Sensoreinheiten 62, 64 kann die Sensorvorrichtung 60 weitere Sensoreinheiten (in den Zeichnungen nicht explizit gezeigt) aufweisen. Beispielsweise kann zumindest eine dritte und/oder eine vierte Sensoreinheit vorgesehen sein, die in Vorwärtsrichtung des Sattelaufliegers 10 am oder im linken bzw. rechten Bereich des Zapfenkörpers 41 angeordnet ist und ähnlich dem Prinzip der ersten und zweiten Sensoreinheiten 62, 64 funktionieren. Die zumindest eine dritte bzw. vierte Sensoreinheit ist beispielsweise im ersten Bereich 42 des Zapfenkörpers 41 angeordnet und kann von der Sattelkupplungsplatte 32 betätigt werden. In dieser Ausgestaltung können ebenfalls dritte und vierte Tastvorrichtungen vorgesehen sein, die ebenfalls von dem zweiten Ende 86 des Hebels 82 betätigt werden und ein entsprechendes Signal erzeugen, die eine Rechts- bzw. Linksbewegung des Sattelaufliegers 10 anzeigen.

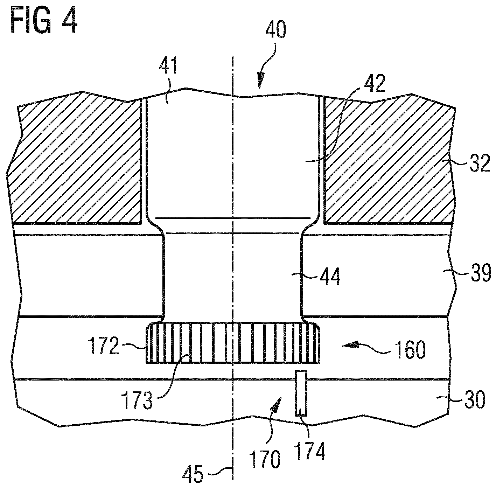

Unter Bezugnahme auf die Fig. 4 ist eine weitere beispielhafte Ausführungsform eines Königszapfens 40 mit einer Sensorvorrichtung 160 gezeigt. In der Fig. 4 ist der Königszapfen 40 in einer in der Sattelkupplung 30 der Fig. 2 gezeigten Verriegelungsposition gezeigt. Die Sattelkupplungsplatte 32 umgibt den ersten Bereich 42 des Zapfenkörpers 41 des Königszapfens 40 zumindest teilweise in Umfangsrichtung. Außerdem ist der Riegel 39 der Verriegelungsvorrichtung 38 gezeigt, der hinter der Schnittebene der Fig. 4 verläuft und die Bewegung des Königszapfens 40 in die Blattebene hinein sperrt. Der Riegel 39 ist unterhalb der Sattelkupplungsplatte 32 angeordnet, so dass der Riegel 39 auf der Höhe des zweiten Bereichs 44 des Königszapfens 40 horizontal verläuft.

Die Sensorvorrichtung 160 weist in der in der Fig. 4 gezeigten Ausführungsform eine Winkelsensoreinheit 170 auf, die einen Markierungsring 172 und einen Sensor 174, der an der zugfahrzeugseitigen Sattelkupplung 30 angeordnet ist, aufweist. Der Markierungsring 172 ist an einem unteren Ende des Zapfenkörpers 41 angeordnet und mit dem Zapfenkörper 41 verbunden. Der Markierungsring 172 kann am Zapfenkörper 41 befestigt, beispielsweise verschweißt, sein oder kann mit dem Zapfenkörper 41 einteilig ausgeführt sein.

Der Markierungsring 172 weist mehrere Markierungen 173 auf, die in Umfangsrichtung des Markierungsrings 172 im Wesentlichen äquidistant angeordnet sind. Beispielsweise sind die Markierungen 173 mehrere am Umfang des Markierungsrings 172 angeordnete Zähne. Der Sensor 174, beispielsweise ein induktiver Sensor, kann bei Drehung des Zapfenkörpers 41 zusammen mit dem Markierungsring 172 den Wechsel zwischen Zahn und Zahnlücke erfassen, wobei damit eine Änderung des magnetischen Flusses im Sensor 174 erzeugt wird. Somit kann beispielsweise aus der erfassten Anzahl der Wechsel zwischen Zahn und Zahnlücke, der Anzahl von Zähnen 173 und dem Durchmesser des Markierungsrings 172 das Ausmaß der Drehbewegung des Zapfenkörpers 41 relativ zum Zugfahrzeug erfasst und somit ein Signal erzeugt werden, das den Winkel zwischen der Längsachse des Zugfahrzeugs und der Längsachse des Sattelaufliegers 10 anzeigt.

In alternativen Ausführungsformen können die mehreren Markierungen 173 vertikale Striche sein, die am Markierungsring 172 angebracht sind. In dieser Ausführungsform kann der Sensor 174 z. B. am Riegel 39 oder an der Sattelkupplungsplatte 32 angeordnet sein, um in horizontaler Richtung den Wechsel zwischen Strich und Lücke zu erfassen. Außerdem kann in alternativen Ausführungsformen der Sensor 174 ein aktiver Sensor sein.

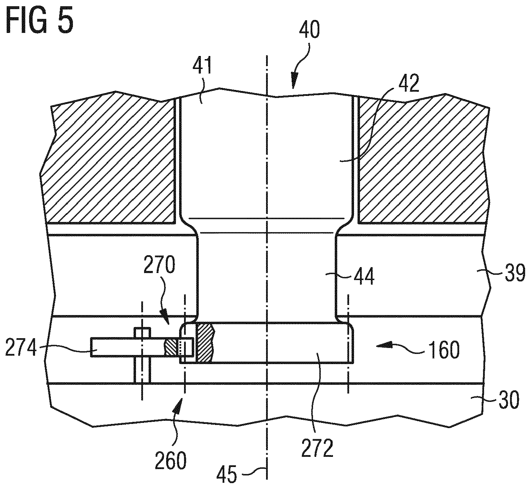

Unter Bezugnahme auf die Fig. 5 ist eine weitere beispielhafte Ausführungsform eines Königszapfens 40 mit einer Sensorvorrichtung 260 gezeigt. In der Fig. 5 ist der Königszapfen 40 in einer in der Sattelkupplung 30 der Fig. 2 gezeigten Verriegelungsposition gezeigt. Die Sattelkupplungsplatte 32 umgibt den ersten Bereich 42 des Zapfenkörpers 41 des Königszapfens 40 in Umfangsrichtung. Außerdem ist der Riegel 39 der Verriegelungsvorrichtung 38 gezeigt, der hinter der Schnittebene der Fig. 5 verläuft und die Bewegung des Königszapfens 40 in die Blattebene hinein sperrt. Der Riegel 39 ist unterhalb der Sattelkupplungsplatte 32 angeordnet, so dass der Riegel 39 auf der Höhe des zweiten Bereichs 44 des Königszapfens 40 horizontal verläuft.

Die Sensorvorrichtung 260 weist in der in der Fig. 5 gezeigten Ausführungsform eine Winkelsensoreinheit 270 auf. Die Winkelsensoreinheit 270 besteht aus einem Zahnring 272 mit mehreren am Umfang des Zahnrings 272 angeordneten Zähnen und einem Zahnrad 274, das an der zugfahrzeugseitigen Sattelkupplung 30 gelagert ist und kontinuierlich mit dem Zahnring 272 kämmt. Der Zahnring 272 ist an einem unteren Ende des Zapfenkörpers 41 angeordnet und mit dem Zapfenkörper 41 verbunden. Der Zahnring 272 kann am Zapfenkörper 41 befestigt, beispielsweise verschweißt, sein oder kann mit dem Zapfenkörper 41 einteilig ausgeführt sein.

Ferner weist die Winkelsensoreinheit 270 einen Drehratensensor (in der Fig. 5 nicht explizit dargestellt) auf, der am Zahnrad 274 angeordnet ist. Der Drehratensensor erfasst eine Drehung des Zahnrads 274, die durch eine Drehung des Hauptköpers 41 relativ zum Zugfahrzeug erzeugt wird, und kann daraufhin ein Signal erzeugen. Bei einer Drehung des Zapfenkörpers 41 relativ zur Sattelkupplung 30 wird das mit dem Zahnring 272 kämmende Zahnrad 274 gedreht. Mit der vorbestimmten Übersetzung zwischen dem Zahnring 272 und dem Zahnrad 274 kann aus der vom Drehratensensor gemessenen Drehung des Zahnrads 274 auf die Drehung des Zahnrings 272 und somit auf die Drehung des Zapfenkörpers 41 relativ zum Zugfahrzeug geschlossen werden. Somit kann daraufhin aus der ermittelten Drehbewegung des Zapfenkörpers 41 auf den Winkel zwischen der Längsachse des Zugfahrzeugs und der Längsachse des Sattelaufliegers 10 geschlossen werden.

Der in den Fig. 3 bis 5 beispielhaft dargestellte Königszapfen 40 kann ferner eine Steuereinheit aufweisen, die die von der Sensorvorrichtung 60 erfassten Signale empfängt und verarbeitet. Die Steuereinheit kann ferner dazu ausgebildet sein, Signale vom Zugfahrzeug zu empfangen, die beispielsweise die Geschwindigkeit des Zugfahrzeugs, den Lenkeinschlag des Lenkrads und den Betätigungsgrad des Gas-oder Bremspedals anzeigen. Die Steuereinheit kann dann basierend auf den empfangenen Signalen Signale erzeugen, die dann wiederum verschiedenen Vorrichtungen übertragen werden, um den Betrieb des Zuggespanns zu steuern.

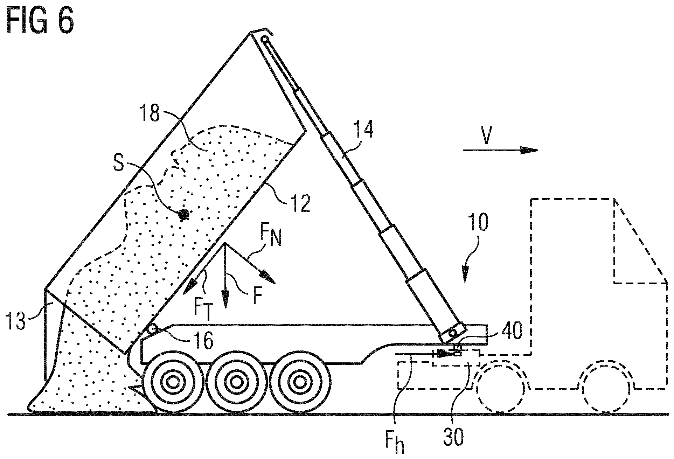

Die Fig. 6 zeigt einen Kippsattelauflieger 10, der mit einem Zugfahrzeug (in der Fig. 6 schematisch mit gestrichelten Linien dargestellt) gekoppelt ist. Dazu ist der Königzapfen in der zugfahrzeugseitigen Sattelkupplung 30 verriegelt. Auf dem Kippsattelauflieger 10 ist eine Kippmulde 12 angeordnet, die z. B. über einen hydraulischen Teleskopzylinder 14 um ein im hinteren Bereich des Kippsattelaufliegers angeordnetes Schwenklager 16 schwenkbar ist. In der Kippmulde 12 ist schematisch ein Transportgut 18 dargestellt, dessen Schwerpunkt S eingezeichnet ist. Bei der in der Fig. 6 gezeigte ausgefahrenen Stellung des Teleskopzylinders 14 kann das Transportgut 18 durch den Einfluss der Schwerkraft durch eine hintere Öffnung 13 in der Kippmulde 12 ausgeschüttet werden.

Die Gewichtskraft F des Transportguts 18 wirkt senkrecht nach unten und auf den Boden der Kippmulde 12. Mechanisch betrachtet kann die Gewichtskraft F in eine zum Boden der Kippmulde senkrechte Kraftkomponente F_{N} und eine zum Boden der Kippmulde 12 parallel verlaufende Kraftkomponente F_{T} zerlegt werden. Die Kraftkomponente F_{N} wiederum weist während der Schrägstellung des Kippmulde 12 und dem Schüttvorgang eine horizontal in Vorwärtsfahrtrichtung V verlaufende Kraftkomponente F_{H} auf, die den Kippsattelauflieger 10 veranlasst, sich zumindest teilweise nach vorne zu bewegen.

Durch diese von der Schrägstellung der Kippmulde 12 und dem Schüttvorgang verursachte Vorwärtsbewegung des Kippsattelaufliegers 10 gelangt die Mantelfläche des Königszapfens 40 mit der Sattelkupplung 30 in Berührung und die Sensorvorrichtung 60 (in der Fig. 6 nicht gezeigt) kann betätigt werden. In diesem Fall kann dem Fahrer ein Signal ausgegeben werden, das anzeigt, dass das gesamte Zuggespann zumindest teilweise nach vorne bewegt wird, damit der Teleskopzylinder 14 entlastet und eine Beschädigung desgleichen vermieden werden kann. Außerdem kann dieses Signal dem Fahrer anzeigen, dass das Transportgut 18 überhaupt aus der Kippmulde 12 fließt. Während dem Schüttvorgang kann dem Fahrer des Zugfahrzeugs ferner angezeigt werden, dass die Kippmulde 12 vollständig entleert ist und das gesamte Transportgut 18 ausgeschüttet ist.

Beim Einleiten des Schüttvorgang ein beginnt der Fahrer zunächst mit dem Kippen der Kippmulde 12. In dem Fall, in dem das Transportgut 18 während dem Kippvorgang der Kippmulde 12 nicht aus der Kippmulde 18 rutscht, da es beispielsweise teilweise am Boden und/oder den Seitenwänden der Kippmulde 18 festgefroren ist oder grundsätzlich schlecht rutscht, und in dem keine Sensorvorrichtung 60 vorhanden wäre, würde der Fahrer dann das Zuggespann nach vorne bewegen, um dem eigentlich aus der Kippmulde 12 rutschenden Transportgut 18 Platz zu schaffen. Jedoch wird bei voll ausgefahrener Kippmulde 12 in diesem Zustand der Teleskopzylinder 14 derart überlastet, das es im schlimmsten Fall zu Beschädigungen des Teleskopzylinders 14, beispielsweise Knicken, führt.

Durch ein von der Sensorvorrichtung 60 erzeugten Signal kann dem Fahrer nun während dem Schüttvorgang angezeigt werden, dass das Transportgut 18 tatsächlich aus der Kippmulde 12 rutscht und er erst dann das Zuggespann nach vorne Fahren darf, wenn dieses Signal erzeugt ist, um Beschädigungen des Teleskopzylinders 14 zu vermeiden. Genauer gesagt sollte der Fahrer erst dann eine Vorwärtsbewegung des Zuggespanns bei maximalem Kippwinkel der Kippmulde 12 ausführen, wenn die Sensorvorrichtung 60 aufgrund des rutschenden Transportguts 18 eine Relativbewegung zwischen dem Sattelauflieger 10 und dem Zugfahrzeug ermittelt.

### Gewerbliche Anwendbarkeit

Im Folgenden wird unter Bezugnahme auf die Fig. 1 bis 6 die Funktionsweise des mit einer Sensorvorrichtung 60, 160, 260 versehenen Königszapfens 40 beschrieben.

Nach dem Kuppeln des Sattelaufliegers 10 mit einem Zugfahrzeug kann das Zugfahrzeug den Sattelauflieger ziehen. Während der Fahrt des Zuggespanns können mit Hilfe der Sensorvorrichtung 60, 160, 260 verschiedene Fahrzustände des Sattelaufliegers 10 erfasst werden.

Beispielsweise gelangt während eines Beschleunigungsvorgangs des Zugfahrzeugs der Riegel 39 der Verriegelungsvorrichtung 38 mit dem zweiten Bereich 44 des Königszapfens 40 in Berührung. Dadurch wird das Kontaktelement 70, das vor der Berührung von der Mantelfläche des zweiten Bereichs 44 zumindest teilweise radial nach außen hervorsteht, zumindest teilweise radial nach innen entlang der ersten Bohrung 52 gedrückt. Die radiale Bewegung des Kontaktelements 70 wird über die Federeinrichtung 74 auf den in der zweiten Bohrung 50 gelagerten Hebel 82 übertragen, was zu einer Schwenkbewegung des zweiten Endes 86 des Hebels 82 nach links führt. Überschreitet die vom Kontaktelement 70 auf den Hebel 82 aufgebrachte Kraft eine vorbestimmte Kraft, betätigt das zweite Ende 86 des Hebels 82 die erste Tastvorrichtung 90, die dann ein Signal erzeugt, das den Fahrzustand "Beschleunigung" des Sattelaufliegers 10 anzeigt.

Andererseits gelangt während einer Verzögerung des Zugfahrzeugs die Sattelkupplungsplatte 32 mit dem ersten Bereich 42 des Königszapfens 40 in Berührung. Dadurch wird das Kontaktelement 72, das vor der Berührung von der Mantelfläche des ersten Bereichs 42 zumindest teilweise radial nach außen hervorsteht, zumindest teilweise radial nach innen entlang der ersten Bohrung 54 gedrückt. Die radiale Bewegung des Kontaktelements 72 wird über die Federeinrichtung 76 auf den in der zweiten Bohrung 50 gelagerten Hebel 82 übertragen, was zu einer Schwenkbewegung des zweiten Endes 86 des Hebels 82 nach rechts führt. Überschreitet die vom Kontaktelement 72 auf den Hebel 82 aufgebrachte Kraft eine vorbestimmte Kraft, betätigt das zweite Ende 86 des Hebels 82 die zweite Tastvorrichtung 92, die dann ein Signal erzeugt, das den Fahrzustand "Verzögerung" des Sattelaufliegers 10 anzeigt.

Bei einer Kurvenfahrt des Zuggespanns kommt es, relativ zum Zugfahrzeug, zu einer Drehung des Königszapfens 40 in der Sattelkupplung 30. Dabei erfasst der Sensor 174 die Markierungen 173 des Markierungsrings 172 und erzeugt ein Signal, das den Winkel zwischen der Längsachse des Zugfahrzeugs und der Längsachse des Sattelaufliegers 10 und die Richtung (Links- oder Rechtskurve) anzeigt. Das den Winkel zwischen der Längsachse des Zugfahrzeugs und der Längsachse des Sattelaufliegers 10 anzeigende Signal kann auch von dem am Zahnrad 274 angebrachten Drehratensensor erzeugt werden.

Die Steuereinheit kann die Signale von den Sensoreinheiten 62, 64 und der Winkelsensoreinheit 170, 270 empfangen und darauf basierend unter Berücksichtigung andere Signale, die beispielsweise die Fahrgeschwindigkeit des Zugfahrzeugs, das Lenkausmaß des Lenkrads des Zugfahrzeugs, den Betätigungsgrad des Gas- oder Bremspedals oder das aktuelle Gewicht des Sattelaufliegers 10 anzeigen, Signale erzeugen. Diese Signale können dann an ein am Sattelauflieger 10 angeordneten Rekuperationssystem übertragen werden, die das Rekuperationssystem effektiv steuern.

In weiteren Ausführungsbeispielen können die von der Sensorvorrichtung 60, 160, 260 erzeugten Signale, die den Beschleunigungs- oder Verzögerungszustand anzeigen, einem Modulator eines an dem Sattelauflieger 10 angebrachten elektronischen Bremssystem (EBS) zugeführt werden. In Kombination mit der beispielsweise von einem Ladungssensor erfassten Signal, das die Last an einer Radachse 12 des Sattelaufliegers 10 anzeigt, kann dem Fahrer eine Warnung ausgegeben werden, dass z. B. die der zugehörigen Last zugeordnete Maximalgeschwindigkeit überschritten ist und somit eine Reduktion der aktuellen Geschwindigkeit vom Fahrer des Zugfahrzeugs vorgenommen werden sollte.

In einer weiteren beispielhaften Ausführungsform können die von der Sensorvorrichtung 60, 160, 260 erzeugten Signale einem Überrollschutzsystem des Sattelaufliegers zugeführt werden. Das Überrollschutzsystem verhindert beispielsweise ein Umkippen des Sattelaufliegers während einer Kurvenfahrt. Z. B. kann mit Hilfe der aktuellen Fahrgeschwindigkeit und des erfassten Winkels zwischen der Längsachse des Zugfahrzeugs und der Längsachse des Sattelaufliegers bestimmt werden, ob sich der Sattelauflieger in einem für die aktuell durchfahrene Kurve kritischen Zustand befindet. Wird ein solcher kritischer Zustand festgestellt, kann beispielsweise ein kurveninneres Rad des Sattelaufliegers gebremst werden, wodurch sich die Zentripetalkraft im Sattelkupplungsbereich erhöht.

In einer weiteren Ausführungsform können die von der Sensorvorrichtung erzeugten Signale dazu verwendet werden, den Verriegelungszustand der Verriegelungsvorrichtung 38 der Sattelkupplung 30 zu bewerten. Wenn beispielsweise bei einer Beschleunigung des Zugfahrzeugs das von der ersten Sensoreinheit 62 erzeugte Signal unterbrochen wird, kann dies daraufhindeuten, dass die Verriegelungsvorrichtung 38 defekt ist und der Sattelauflieger 10 mit dem Zugfahrzeug bzw. der Sattelkupplung 30 nicht ordnungsgemäß verbunden ist. Daraufhin kann z. B. die Steuerung dem Fahrer des Zugfahrzeugs ein entsprechendes Warnsignal ausgeben, das den gelösten Zustand anzeigt.

In einer Ausführungsform, in der die Sensorvorrichtung 60 die erste Sensoreinheit 62, die zweite Sensoreinheit 64, zumindest eine dritte Sensoreinheit und/oder zumindest eine vierte Sensoreinheit aufweist, können die von den Sensoreinheiten 62, 64 erzeugten Signale dazu verwendet werden, den Fahrer bei einem Kupplungsvorgang des Zugfahrzeugs mit dem Sattelauflieger 10, während dem der Fahrer das Zugfahrzeug derart manövriert, dass der Königszapfen 40 des Sattelaufliegers 10 in der Verriegelungsposition in der Führungsöffnung 34 positioniert wird, zu unterstützten. Die am Umfang des Königszapfens 40 vorgesehenen Sensoreinheiten erfassen jeweils die Position des Königszapfens 40 relativ zur Sattelkupplung, so dass dem Fahrer angezeigt werden kann, in welche Richtung er das Zugfahrzeug steuern muss, damit der Königszapfen 40 in der Führungsöffnung 34 bevorzugt mittig bis in die Verriegelungsposition geführt wird. Ferner kann beispielsweise ein GPS-Sensor am Königszapfen vorgesehen sein, mit dem zusätzlich der Kupplungsvorgang genau und sicher durchgeführt werden kann.

Im Rahmen der vorliegenden Erfindung sind die Sensoreinheiten 62, 64 und die Winkelsensoreinheiten 170, 270 beispielhaft dargestellt. In weiteren beispielhaften Ausführungsformen ist die Sensorvorrichtung 60, 160, 260 nur mit einer Winkelsensoreinheit 170, 270 versehen. In anderen beispielhaften Ausführungsformen weist die Sensorvorrichtung 60, 160, 260 nur zumindest eine Sensoreinheit 62, 64 auf. In weiteren beispielhaften Ausführungsformen weist die Sensorvorrichtung 60, 160, 260 sowohl zumindest eine Sensoreinheit 62, 64 als auch eine Winkelsensoreinheit 170, 270 auf.

## Patentansprüche

1. Königszapfen (40) zum Anbau an einen Sattelauflieger (10), mit:
- einem mit einer zugfahrzeugseitigen Sattelkupplung (30) lösbar in Eingriff bringbaren Zapfenkörper (41),
- einer Sensorvorrichtung (60; 160; 260), die am Zapfenkörper (41) angeordnet und zum Erfassen eines Fahrzustandes des Sattelaufliegers (10) ausgebildet ist, wobei die Sensorvorrichtung (60; 160; 260) wenigstens eine Sensoreinheit (62, 64) aufweist,
**dadurch gekennzeichnet, dass**:
- wenigstens eine erste Bohrung (52, 54) im Zapfenkörper (41) sich von der Mantelfläche des Zapfenkörpers (41) im Wesentlichen radial nach innen erstreckt, und
- wenigstens eine zweite Bohrung (50) im Zapfenkörper (41) sich entlang einer Längsachse (45) des Zapfenkörpers (41) erstreckt und mit der wenigstens einen ersten Bohrung (52, 54) verbunden ist,
wobei die wenigstens eine Sensoreinheit (62, 64) aufweist:
- ein Kontaktelement (70, 72), das in der ersten Bohrung (52, 54) beweglich angeordnet und dazu ausgebildet ist, von der zugfahrzeugseitigen Sattelkupplung (30) bei bestimmten Fahrzuständen in den Zapfenkörper (41) gedrückt zu werden, und
- einen Sensormechanismus (80), der in der zweiten Bohrung (50) im Zapfenkörper (41) angeordnet und dazu ausgebildet ist, ein einen bestimmten Fahrzustand des Sattelaufliegers (10) anzeigendes Signal zu erzeugen, wenn eine vom Kontaktelement (70, 72) auf den Sensormechanismus (80) aufgebrachte Kraft eine vorbestimmte Kraft überschreitet.

2. Königszapfen (40) nach Anspruch 1, bei dem der Zapfenkörper (41) eine Mantelfläche hat, die wenigstens an bestimmten Flächenbereichen mit der zugfahrzeugseitigen Sattelkupplung (30) in Kontakt gelangt, und die Sensorvorrichtung (60) über die Mantelfläche vorsteht.

3. Königszapfen (40) nach einem der vorhergehenden Ansprüche, wobei die Sensorvorrichtung (60) wenigstens eine erste Sensoreinheit (62) aufweist, die in Bezug auf eine Vorwärtsrichtung (V) des Sattelaufliegers (10) an einem rückseitigen Bereich des Zapfenkörpers (41) angeordnet und zum Erfassen eines Beschleunigungsvorgangs des mit einem Zugfahrzeug verbundenen Sattelaufliegers (10) ausgebildet ist.

4. Königszapfen (40) nach Anspruch 3, wobei die Sensorvorrichtung (60) ferner wenigstens eine zweite Sensoreinheit (64) aufweist, die in Bezug auf eine Vorwärtsrichtung (V) des Sattelaufliegers (10) an einem vorderseitigen Bereich des Zapfenkörpers (41) angeordnet und zum Erfassen eines Verzögerungsvorgangs des mit einem Zugfahrzeug verbundenen Sattelaufliegers (10) ausgebildet ist.

5. Königszapfen (40) nach Anspruch 4, wobei die Sensorvorrichtung (60) ferner aufweist:
- wenigstens eine dritte Sensoreinheit, die in Bezug auf eine Vorwärtsrichtung (V) des Sattelaufliegers (10) an einem linksseitigen Bereich des Zapfenkörpers (41) angeordnet und zum Erfassen einer Bewegung nach rechts des mit einem Zugfahrzeug verbundenen Sattelaufliegers (10) ausgebildet ist, und/oder
- wenigstens eine vierte Sensoreinheit, die in Bezug auf eine Vorwärtsrichtung (V) des Sattelaufliegers (10) an einem rechtsseitigen Bereich des Zapfenkörpers (41) angeordnet und zum Erfassen einer Bewegung nach links des mit einem Zugfahrzeug verbundenen Sattelaufliegers (10) ausgebildet ist.

6. Königszapfen (40) nach einem der vorhergehenden Ansprüche, wobei die wenigstens eine Sensoreinheit (62, 64) ferner eine Federeinrichtung (74, 76) aufweist, die in der ersten Bohrung (52, 54) und/oder der zweiten Bohrung (50) angeordnet und dazu ausgebildet ist, das Kontaktelement (70, 72) in radialer Richtung nach außen zu drücken.

7. Königszapfen (40) nach einem der vorhergehenden Ansprüche, wobei der Sensormechanismus (80) einen Hebel (82) mit einem im Zapfenkörper (41) gelenkig gelagerten ersten Ende (84) und einem dem ersten Ende (84) gegenüberliegenden zweiten Ende (86) aufweist, wobei der Hebel (82) in der zweiten Bohrung (50) angeordnet ist, sich entlang der Längsachse (45) des Zapfenkörpers (41) erstreckt und mit dem Kontaktelement (70, 72) derart in Wirkverbindung steht, dass der Hebel (82) bei einer vom Kontaktelement (70, 72) auf den Hebel (82) aufgebrachten Kraft verschwenkt wird.

8. Königszapfen (40) nach Anspruch 7, wobei der Sensormechanismus (80) ferner wenigstens eine Tastvorrichtung (90, 92) aufweist, die dazu ausgebildet ist, bei einer Schwenkbewegung des Hebels (82) vom zweiten Ende (86) des Hebels (82) betätigt zu werden und ein Signal zu erzeugen, das einen bestimmten Fahrzustand des Sattelaufliegers (10) anzeigt.

9. Königszapfen (40) nach einem der vorhergehenden Ansprüche, wobei
der Zapfenkörper (41) einen ersten Bereich (42) mit einem ersten Durchmesser (D1) und einen zweiten Bereich (44) mit einem zweiten Durchmesser (D2), der kleiner ist als der erste Durchmesser (D1), aufweist, und
wenigstens eine Sensoreinheit (62, 64) im ersten Bereich (42) und/oder im zweiten Bereich (44) angeordnet ist.

10. Königszapfen (40) nach einem der vorhergehenden Ansprüche, wobei die Sensorvorrichtung (160) eine Winkelsensoreinheit (170) umfasst, die dazu ausgebildet ist, ein den Winkel zwischen der Längsachse des Zugfahrzeugs und der Längsachse des Sattelaufliegers (10) anzeigendes Signal zu erzeugen.

11. Königszapfen (40) nach Anspruch 10, wobei die Winkelsensoreinheit (170) mehrere Markierungen (173) am Zapfenkörper (41) umfasst, die von einem an der zugfahrzeugseitigen Sattelkupplung (30) angeordneten Winkelsensor (174) erfassbar sind.

12. Königszapfen (40) nach Anspruch 11, wobei die mehreren Markierungen Zähne (173; 273) sind, die optisch oder mechanisch detektierbar sind.

13. Königszapfen (40) nach einem der vorhergehenden Ansprüche, ferner mit einer Steuereinheit, die mit der Sensorvorrichtung (60; 160; 260) in Verbindung steht und dazu ausgebildet ist, basierend auf den von der Sensorvorrichtung (60; 160; 260) erfassten Fahrzuständen ein Betriebssystem wie beispielsweise ein Rekuperationssystem des Sattelaufliegers oder ein Bremssystem zu steuern.

14. Sattelkupplung (30) zum Anbringen an ein Zugfahrzeug, wobei die Sattelkupplung (30) zur Erfassung eines Winkels zwischen Zugfahrzeug und Sattelauflieger umfasst:
- einen an der Sattelkupplung (30) angeordneten Winkelsensor (174), der Markierungen (173) an dem Zapfenkörper (41) des Königszapfens (40) nach Anspruch 11 erfasst,
und/oder
- ein an der Sattelkupplung (30) drehbar gelagertes Zahnrad (274), das mit Zähnen an dem Zapfenkörper (41) des Königszapfens (40) nach Anspruch 12 kämmt.

## Claims

1. A kingpin (40) for mounting to a semitrailer (10), comprising:
- a pin body (41) detachably engageable with a towing vehicle-side semitrailer coupling (30),
- a sensor device (60; 160; 260) disposed at the pin body (41) and configured to detect a driving state of the semitrailer (10), wherein the sensor device (60; 160; 260) comprises at least one sensor unit (62, 64),
**characterized in that**:
- at least one first bore (52, 54) extends in the pin body (41) from the lateral surface of the pin body (41) essentially radially inward, and
- at least one second bore (50) extends in the pin body (41) along a longitudinal axis (45) of the pin body (41) and is connected to the at least one first bore (52, 54),
wherein the at least one sensor unit (62, 64) comprises:
- a contact element (70, 72) movably disposed in the first bore (52, 54) and configured to be pushed into the pin body (41) by the towing vehicle-side semitrailer coupling (30) at specific driving states, and
- a sensor mechanism (80) disposed in the second bore (50) in the pin body (41) and configured to generate a signal indicating a specific driving state of the semitrailer (10) when a force applied to the sensor mechanism (80) by the contact element (70, 72) exceeds a predetermined force.

2. The kingpin (40) according to claim 1, wherein the pin body (41) has a lateral surface coming into contact with the towing vehicle-side semitrailer coupling (30) at least at specific surface regions, and the sensor device (60) protrudes beyond the lateral surface.

3. The kingpin (40) according to any of the preceding claims, wherein the sensor device (60) comprises at least one first sensor unit (62) disposed at a rear-side section of the pin body (41) with respect to a forward direction (V) of the semitrailer (10) and configured to detect an acceleration process of the semitrailer (10) connected to a towing vehicle.

4. The kingpin (40) according to claim 3, wherein the sensor device (60) further comprises at least one second sensor unit (64) disposed at a front-side section of the pin body (41) with respect to a forward direction (V) of the semitrailer (10) and configured to detect a deceleration process of the semitrailer (10) connected to a towing vehicle.

5. The kingpin (40) according to claim 4, wherein the sensor device (60) further comprises:
- at least one third sensor unit disposed at a left-side section of the pin body (41) with respect to a forward direction (V) of the semitrailer (10) and configured to detect a movement to the right of the semitrailer (10) connected to a towing vehicle,
and/or
- at least one fourth sensor unit disposed at a right-side section of the pin body (41) with respect to a forward direction (V) of the semitrailer (10) and configured to detect a movement to the left of the semitrailer (10) connected to a towing vehicle.

6. The kingpin (40) according to any of the preceding claims, wherein the at least one sensor unit (62, 64) further comprises a spring device (74, 76) disposed in the first bore (52, 54) and/or the second bore (50) and configured to push the contact element (70, 72) outward in a radial direction.

7. The kingpin (40) according to any of the preceding claims, wherein the sensor mechanism (80) comprises a lever (82) with a first end (84) hingedly supported in the pin body (41) and a second end (86) opposed to the first end (84), wherein the lever (82) is disposed in the second bore (50), extends along the longitudinal axis (45) of the pin body (41) and is operatively connected with the contact element (70, 72) in such a manner that the lever (82) is pivoted upon a force applied to the lever (82) by the contact element (70, 72).

8. The kingpin (40) according to claim 7, wherein the sensor mechanism (80) further comprises at least one sensing device (90, 92) configured to be operated upon a pivotal movement of the lever (82) by the second end (86) of the lever (82) and to generate a signal indicating a specific driving state of the semitrailer (10).

9. The kingpin (40) according to any of the preceding claims, wherein
the pin body (41) comprises a first section (42) with a first diameter (D1) and a second section (44) with a second diameter (D2) being smaller than the first diameter (D1), and
at least one sensor unit (62, 64) is disposed in the first section (42) and/or in the second section (44).

10. The kingpin (40) according to any of the preceding claims, wherein the sensor device (160) includes an angle sensor unit (170) configured to generate a signal indicating the angle between the longitudinal axis of the towing vehicle and the longitudinal axis of the semitrailer (10).

11. The kingpin (40) according to claim 10, wherein the angle sensor unit (170) includes plural marks (173) at the pin body (41), which are detectable by an angle sensor (174) disposed at the towing vehicle-side semitrailer coupling (30).

12. The kingpin (40) according to claim 11, wherein the plural marks are teeth (173; 273), which are detectable optically or mechanically.

13. The kingpin (40) according to any of the preceding claims, further with a control unit being connected with the sensor device (60; 160; 260) and configured to control, based on the driving states detected by the sensor device (60; 160; 260), an operating system such as a recuperation system of the semitrailer or a braking system.

14. A semitrailer coupling (30) for attaching to a towing vehicle, wherein the semitrailer coupling (30) comprises for the detection of an angle between towing vehicle and semitrailer:
- an angle sensor (174) disposed at the semitrailer coupling (30), which detects marks (173) at the pin body (41) of the kingpin (40) according to claim 11, and/or
- a gear (274) rotatably supported at the semitrailer coupling (30), which meshes with teeth at the pin body (41) of the kingpin (40) according to claim 12.

## Revendications

1. Pivot central (40) à monter sur une semi-remorque (10), avec :
- un corps de pivot (41) pouvant être mis en prise de manière amovible avec une sellette d'attelage (30) côté véhicule tracteur,
- un capteur (60 ; 160 ; 260), qui est agencé au niveau du corps de pivot (41) et réalisé pour la détection d'un état de conduite de la semi-remorque (10), dans lequel le capteur (60; 160; 260) présente au moins une unité de détection (62, 64),
**caractérisé en ce que** :
- au moins un premier alésage (52, 54) dans le corps de pivot (41) s'étend sensiblement radialement vers l'intérieur depuis la surface d'enveloppe du corps de pivot (41), et
- au moins un deuxième alésage (50) dans le corps de pivot (41) s'étend le long d'un axe longitudinal (45) du corps de pivot (41) et est relié à l'au moins un premier alésage (52, 54),
dans lequel l'au moins une unité de détection (62, 64) présente :
- un élément de contact (70, 72), qui est agencé de manière mobile dans le premier alésage (52, 54) et est réalisé pour être poussé par la sellette d'attelage (30) côté véhicule tracteur en cas d'états de conduite déterminés dans le corps de pivot (41), et
- un mécanisme de détection (80), qui est agencé dans le deuxième alésage (50) dans le corps de pivot (41) et est réalisé pour générer un signal indiquant un état de conduite déterminé de la semi-remorque (10), lorsqu'une force appliquée par l'élément de contact (70, 72) sur le mécanisme de détection (80) dépasse une force prédéterminée.

2. Pivot central (40) selon la revendication 1, dans lequel le corps de pivot (41) a une surface d'enveloppe, qui vient en contact au moins au niveau de zones de surface déterminées avec la sellette d'attelage (30) côté véhicule tracteur, et le capteur (60) fait saillie de la surface d'enveloppe.

3. Pivot central (40) selon l'une quelconque des revendications précédentes, dans lequel le capteur (60) présente au moins une première unité de détection (62), qui est agencée par rapport à une direction vers l'avant (V) de la semi-remorque (10) au niveau d'une zone côté arrière du corps de pivot (41) et est réalisée pour détecter une accélération de la semi-remorque (10) reliée à un véhicule tracteur.

4. Pivot central (40) selon la revendication 3, dans lequel le capteur (60) présente en outre au moins une deuxième unité de détection (64), qui est agencée par rapport à une direction vers l'avant (V) de la semi-remorque (10) au niveau d'une zone côté avant du corps de pivot (41) et est réalisée pour détecter une décélération de la semi-remorque (10) reliée à un véhicule tracteur.

5. Pivot central (40) selon la revendication 4, dans lequel le capteur (60) présente en outre :
- au moins une troisième unité de détection, qui est agencée par rapport à une direction vers l'avant (V) de la semi-remorque (10) au niveau d'une zone côté gauche du corps de pivot (41) et est réalisée pour détecter un mouvement vers la droite de la semi-remorque (10) reliée à un véhicule tracteur,
et/ou
- au moins une quatrième unité de détection, qui est agencée par rapport à une direction vers l'avant (V) de la semi-remorque (10) au niveau d'une zone côté droit du corps de pivot (41) et est réalisée pour détecter un mouvement vers la gauche de la semi-remorque (10) reliée à un véhicule tracteur.

6. Pivot central (40) selon l'une quelconque des revendications précédentes, dans lequel l'au moins une unité de détection (62, 64) présente en outre un dispositif de ressort (74, 76), qui est agencé dans le premier alésage (52, 54) et/ou le deuxième alésage (50) et est réalisé pour pousser l'élément de contact (70, 72) dans la direction radiale vers l'extérieur.

7. Pivot central (40) selon l'une quelconque des revendications précédentes, dans lequel le mécanisme de détection (80) présente un levier (82) avec une première extrémité (84) logée de manière articulée dans le corps de pivot (41) et une deuxième extrémité (86) opposée à la première extrémité (84), dans lequel le levier (82) est agencé dans le deuxième alésage (50), s'étend le long de l'axe longitudinal (45) du corps de pivot (41) et est en liaison active avec l'élément de contact (70, 72) de telle manière que le levier (82) est pivoté lorsqu'une force est appliquée par l'élément de contact (70, 72) sur le levier (82).

8. Pivot central (40) selon la revendication 7, dans lequel le mécanisme de détection (80) présente en outre au moins un dispositif de palpage (90, 92), qui est réalisé pour être actionné par la deuxième extrémité (86) du levier (82) lors d'un mouvement de pivotement du levier (82) et générer un signal qui indique un état de conduite déterminé de la semi-remorque (10).

9. Pivot central (40) selon l'une quelconque des revendications précédentes, dans lequel
le corps de pivot (41) présente une première zone (42) avec un premier diamètre (D1) et une deuxième zone (44) avec un deuxième diamètre (D2), qui est inférieur au premier diamètre (D1), et
au moins une unité de détection (62, 64) est agencée dans la première zone (42) et/ou dans la deuxième zone (44).

10. Pivot central (40) selon l'une quelconque des revendications précédentes, dans lequel le capteur (160) comprend une unité de détection d'angle (170), qui est réalisée pour générer un signal indiquant l'angle entre l'axe longitudinal du véhicule tracteur et l'axe longitudinal de la semi-remorque (10).

11. Pivot central (40) selon la revendication 10, dans lequel l'unité de détection d'angle (170) comprend plusieurs repères (173) au niveau du corps de pivot (41), qui peuvent être détectés par un capteur d'angle (174) agencé au niveau de la sellette d'attelage (30) côté véhicule tracteur.

12. Pivot central (40) selon la revendication 11, dans lequel les plusieurs repères sont des dents (173; 273), qui sont détectables optiquement ou mécaniquement.

13. Pivot central (40) selon l'une quelconque des revendications précédentes, en outre avec une unité de commande, qui communique avec le capteur (60; 160; 260) et est réalisée pour commander un système d'exploitation comme par exemple un système de récupération de la semi-remorque ou un système de freinage sur la base des états de conduite détectés par le capteur (60 ; 160 ; 260).

14. Sellette d'attelage (30) à monter sur un véhicule tracteur, dans lequel la sellette d'attelage (30) pour la détection d'un angle entre le véhicule tracteur et la semi-remorque comprend :
- un capteur d'angle (174) agencé au niveau de la sellette d'attelage (30), qui détecte des repères (173) sur le corps de pivot (41) du pivot central (40) selon la revendication 11,
et/ou
- une roue dentée (274) logée de manière rotative au niveau de la sellette d'attelage (30), qui peigne avec des dents au niveau du corps de pivot (41) du pivot central (40) selon la revendication 12.
